# DEMANDE DE BREVET EUROPEEN

(11) **EP 1 990 890 A1**
(43) Date de publication de la demande: **12.11.2008**
(21) Numéro de dépôt: 08354027.8
(22) Date de dépôt: 06.05.2008
(51) Int. Cl.: H02J 7/00, H02J 7/35

(54) **Procédé de charge d'une batterie d'un système autonome**

(30) Priorité: 11.05.2007 FR 0703371
(71) Demandeur: Commissariat à l'Energie Atomique, 75015 Paris (FR)
(72) Inventeur: Genies, Sylvie, 38120 Saint Egrève (FR); Labrunie, Antoine, 73000 Chambery (FR); Mattera, Florence, 38120 Saint Egrève (FR)
(74) Mandataire: Jouvray, Marie-Andrée

(57) **Abrégé**

Dans un système autonome, le procédé de charge, à partir d'un générateur, d'un élément de stockage d'énergie, comporte une mesure de la température, avec le passage d'un premier mode de charge à un deuxième mode de charge à tension asservie à la température. Le premier mode de charge est une charge à courant régulé à une valeur maximale de courant, fonction de l'état de charge de l'élément de stockage d'énergie et de la température de l'élément de stockage d'énergie. Le passage est réalisé lorsque la tension aux bornes de l'élément de stockage d'énergie atteint une valeur seuil prédéterminée, elle-même fonction de la valeur du courant et de la température de l'élément de stockage d'énergie.

## Description

### Domaine technique de l'invention

L'invention est relative à un procédé de charge, à partir d'un générateur, d'un élément de stockage d'énergie d'un système autonome comportant une mesure de la température, avec le passage d'un premier mode de charge à un deuxième mode de charge, lorsque la tension aux bornes de l'élément de stockage d'énergie atteint une valeur seuil prédéterminée, le deuxième mode de charge étant une charge à tension asservie à la température.

### État de la technique

Les systèmes autonomes, exploitant une source d'énergie renouvelable, nécessitent généralement l'utilisation d'un stockage de l'énergie, produite par intermittence. Les systèmes de stockage d'énergie les plus utilisés sont les accumulateurs électrochimiques, notamment les batteries « plomb-acide ». Cependant, de nouvelles technologies de stockage, en particulier à base de nickel ou de lithium émergent pour répondre aux besoins de stockage d'énergie.

Dans ces systèmes, la charge ou la décharge d'une batterie est réalisée sous le contrôle d'un régulateur. Le rôle principal du régulateur est de gérer la fin de charge et la fin de décharge d'une batterie pour limiter, respectivement, la surcharge et les décharges à des niveaux excessifs. De nombreux régulateurs existent sur le marché et diffèrent, entre autres, par le traitement de la fin de charge.

La charge de type connexion/déconnexion consiste à arrêter la charge ou la décharge lorsque la batterie atteint un seuil de tension prédéfini. Une batterie dont l'une de ces deux tensions limites, de charge ou de décharge, est atteinte est ainsi déconnectée afin de la protéger, respectivement d'une surcharge ou d'une décharge excessive, qui risquerait d'endommager la batterie de façon irréversible.

La charge de type « floating » ou charge d'entretien consiste en l'application d'un courant constant jusqu'à une certaine tension puis le maintien de cette tension, ou tension d'entretien, pendant un certain temps afin de compléter la charge de la batterie. Pour limiter la détérioration de la batterie, par exemple dans le cas des batteries au plomb, une régulation de la tension d'entretien en fonction de la température peut être prévue afin de limiter la cinétique des réactions secondaires (qui augmente avec la température).

La charge de type ampère-heure métrique consiste à mesurer l'énergie délivrée à la batterie et à fixer une quantité d'énergie maximale de charge pour recharger la batterie. Pour les batteries au plomb, un coefficient de surcharge est appliqué de manière à compenser le courant utilisé pour les réactions parasites, notamment celle de l'électrolyse de l'eau, qui se produit au détriment de la réaction principale. Cependant, le calcul de l'énergie délivrée à la batterie demeure imprécis et le critère de fin de charge reste non optimisé. Dans la plupart des cas, cette imprécision conduit à une surcharge excessive de la batterie et, dans le cas de la technologie plomb, à une forte consommation d'eau ainsi qu'à la corrosion des grilles.

La charge de type tension à l'abandon, basée sur la mesure de potentiel après un temps de relaxation, nécessite de connaître plusieurs paramètres de l'état de la batterie : la résistance interne, le potentiel à l'abandon, la tension et le courant appliqué. Le temps de relaxation peut être assez long, par exemple, deux heures dans le cas de batteries au plomb. Ceci présente un inconvénient au niveau de l'utilisation pratique d'une telle méthode en temps réel, malgré sa précision pour l'estimation de l'état de charge concernant certains types d'accumulateurs comme les batteries Nickel Metal-Hydrure, « Nickel-MH » (brevet WO 2005/101042)

Cet état de la technique, malgré les limitations inhérentes aux différentes méthodes utilisées, apporte, à minima, une information sur l'état de charge maximum de la batterie.

Cependant, ces limitations sont renforcées par les contraintes supplémentaires imposées lorsque le processus de charge de la batterie est assuré par un système autonome avec une source d'énergie variable (éolien, photovoltaïque, micro-hydraulique...), soumis à des conditions environnementales non contrôlées :
- Lors d'une charge à courant constant, la tension est imposée par l'état de charge de la batterie. Si la source d'énergie est fluctuante, le courant ne peut pas être constant.
- Si la puissance fournie par la source est faible sur de longues périodes (faible ensoleillement en hiver pour un générateur photovoltaïque, vitesse du vent insuffisante pour un générateur éolien), le courant de charge de la batterie sera faible et la durée de charge sera élevée. Par conséquent, l'erreur sur la mesure du courant risque de devenir non négligeable et cette erreur sera intégrée sur un laps de temps important. Ainsi l'énergie délivrée calculée sera très différente de l'énergie délivrée réellement et la détermination de la fin de charge erronée. Le risque de surcharge sera fort.
- La température de fonctionnement du système étant variable dans le temps, la température de la batterie dépendra au moins autant de la température du système et de son environnement que d'une éventuelle réaction exothermique de fin de charge.

Aucun des systèmes existants, s'ils permettent dans certains cas de limiter les phénomènes de surcharge ou de décharge excessive, ne permet d'optimiser le temps de charge.

### Objet de l'invention

L'objet de l'invention consiste à pallier les inconvénients précités et en particulier d'optimiser le processus de charge de la batterie tout en gardant une sécurité optimale et en limitant les phénomènes de dégradation interne.

Selon l'invention, ce but est atteint par le fait que le procédé comporte un premier mode de charge qui est une charge à courant régulé à une valeur de courant qui est fonction de l'état de charge de l'élément de stockage d'énergie (1) et de la température.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
- la figure 1 représente de façon schématique un système autonome dans lequel le procédé selon l'invention peut être mis en oeuvre.
- la figure 2 représente, de façon schématique, l'évolution de la tension seuil de fin de charge en fonction de la température pour le mode de charge à courant régulé.
- la figure 3 représente, de façon schématique, l'évolution du courant maximum de charge en fonction de l'état de charge de la batterie dans le mode de charge à courant régulé.
- la figure 4 représente de façon schématique, l'évolution de la tension de charge en fonction de l'état de charge de la batterie dans le mode de charge à courant régulé.
- la figure 5 représente, de façon schématique, l'évolution du courant de charge et de la tension de charge en fonction du temps de charge de la batterie, durant une charge de la batterie, pour différentes températures.

### Description d'un mode préférentiel de l'invention

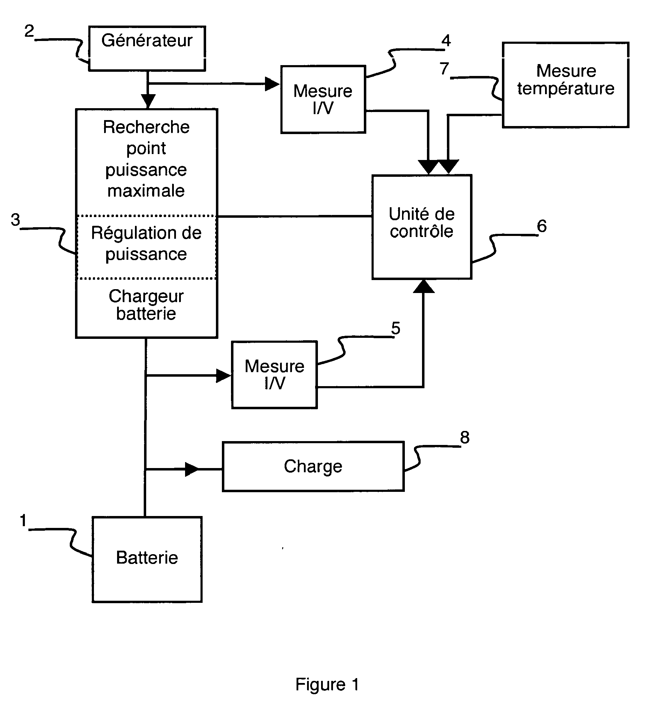

Comme illustré sur la figure 1, le système autonome comporte au moins une batterie 1 comme élément de stockage d'énergie, un générateur 2 d'énergie et un régulateur 3 de puissance connecté entre le générateur 2 et la batterie 1. Des circuits de mesures 4 et 5, permettant respectivement de mesurer la tension et le courant à la sortie du générateur 2 et aux bornes de la batterie 1, sont connectés à une unité de contrôle 6, également connectée au régulateur 3 de puissance. Un circuit 7 de mesure de la température est également connecté à l'unité de contrôle 6. Une charge 8 est classiquement alimentée par la batterie 1.

Le circuit 7 de mesure de la température comporte, de préférence, au moins un capteur de mesure de la température ambiante et un capteur de mesure de la température de la batterie 1. L'unité de contrôle 6 peut alors calculer la différence de température entre la batterie 1 et son environnement.

Le générateur 2 d'énergie est, par exemple, un panneau photovoltaïque ou un dispositif micro-hydraulique ou éolien.

Le régulateur 3 de puissance comporte, de préférence, un convertisseur de type BUCK. Le régulateur 3 comporte avantageusement, également, un dispositif de recherche du point de puissance maximal (« MPPT, Maximum Power Point Tracking » en anglais) et un chargeur de batterie. L'unité de contrôle 6 est ainsi destinée à gérer, par l'intermédiaire du régulateur 3 de puissance, l'adéquation entre la puissance fournie par le générateur 2 et la charge de la batterie 1.

L'unité de contrôle 6 peut déterminer la puissance à la sortie du générateur 2, à partir des mesures de la tension et de l'intensité fournies par le circuit de mesure 5. De manière connue, l'unité de contrôle 6 peut déterminer l'état de charge (SOC) de la batterie 1, par exemple en fonction de la température de la batterie 1 et de la tension aux bornes de la batterie 1 fournie par le circuit de mesure 5, et au moyen d'abaques empiriques ou modélisés.

Selon l'invention, la charge de la batterie 1 s'effectue tout d'abord à courant régulé, puis à tension asservie lorsque la tension aux bornes de la batterie 1 atteint un certain seuil Vseuil. Ainsi, l'état de charge de la batterie 1 ayant été déterminé et la température de la batterie 1 ayant été mesurée, l'unité de contrôle 6 est alors en mesure de calculer, en fonction de la technologie de la batterie 1, de son état de charge et de sa température, le courant maximal acceptable par la batterie 1 pour une charge à courant régulé au courant maximal. Ce courant représente en fait le courant à ne pas dépasser pour assurer une charge optimisée de la batterie 1 sans dégradation.

Cependant, l'utilisation de la température de la batterie 1 peut être avantageusement éliminée selon la technologie de la batterie 1 utilisée.

Dans le cas où la batterie 1 est de type lithium-ion, il n'existe pas de réactions secondaires (pas de décomposition de l'électrolyte organique) qui entraîne une élévation de la température. La température de la batterie 1 étant alors égale à la température ambiante, cette dernière est avantageusement utilisée au sein du dispositif.

Dans le cas où la batterie 1 est de type plomb-acide, l'augmentation de la température par les réactions secondaires peut être très importante (par exemple de l'ordre de 60°C), mais cette augmentation de la température n'apparaît qu'en fin de charge. Ainsi, pendant la charge à courant régulé, la température de la batterie 1 est très proche de la température ambiante. Avantageusement, une distinction entre la température de la batterie 1 et la température ambiante ne peut être faite que lors de la fin de charge de la batterie 1.

Dans le cas où la batterie 1 est de type Ni-Cd ou Ni-MH, une élévation de la température de la batterie à lieu au fur et à mesure de la charge. La fin de la charge de la batterie 1 est détectée par une élévation de la température plus rapide. La distinction entre la température de la batterie 1 et la température ambiante doit être faite.

L'unité de contrôle 6 fixe alors, au moyen du régulateur 3 de puissance, le courant de charge aux bornes de la batterie 1 à la valeur de courant maximal, sous réserve que le générateur 2 puisse fournir une puissance suffisante.

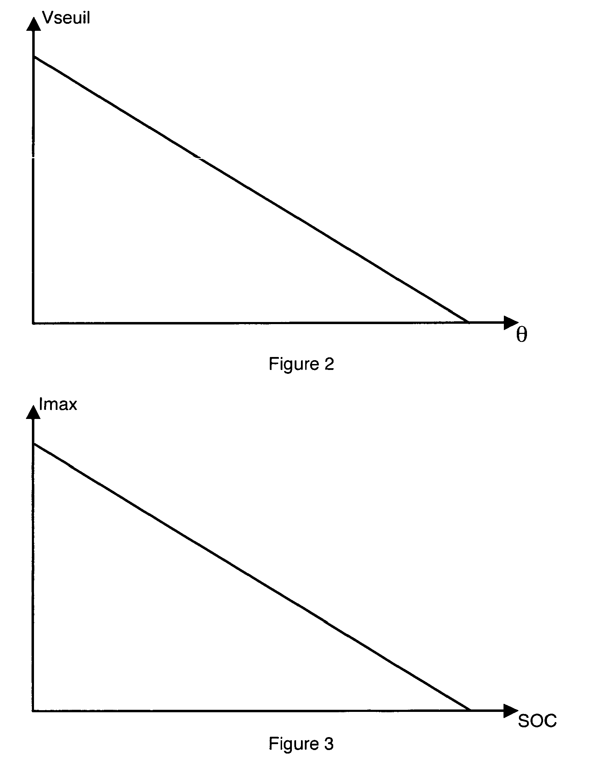

Le courant de charge, aux bornes de la batterie 1, étant mesuré par le circuit de mesure 5, l'unité de contrôle 6 est alors en mesure de calculer la tension seuil Vseuil, en fonction du courant de charge aux bornes de la batterie 1 et de sa température, grâce à des abaques empiriques ou modélisés. Cette tension Vseuil peut être par exemple la tension nécessaire pour obtenir 90% de la charge de la batterie. Comme illustré sur la figure 2, la tension seuil est, de préférence, linéairement décroissante avec la température (θ) de la batterie. Cette tension seuil représente la tension maximale aux bornes de la batterie 1 pour laquelle une charge à courant régulé au courant maximal est possible sans dégrader la batterie 1.

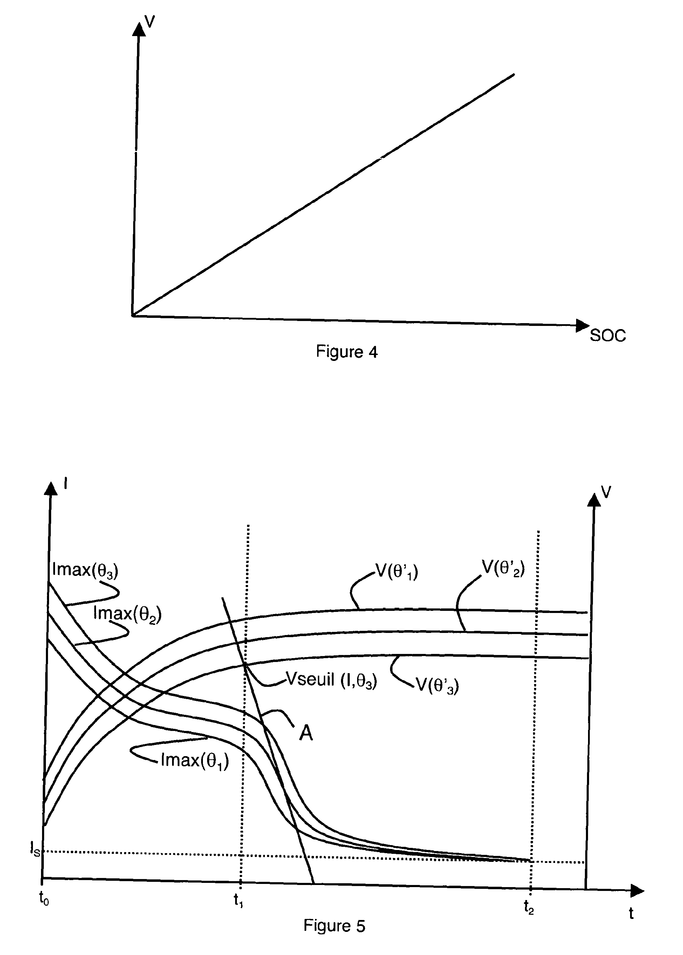

De manière générale, plus la température et/ou le courant de charge est élevé et plus la tension seuil sera faible. La figure 2 illustre de façon schématique, l'évolution de la tension seuil Vseuil avec la température θ de la batterie. De même, la figure 5 illustre, schématiquement, pour trois températures différentes, θ₁, θ₂, θ₃, l'évolution du courant de charge I et la tension seuil et de charge V en fonction du temps. Pendant la charge à courant régulé, le courant de charge est égal au courant maximal Imax(θ).

Le courant maximal à utiliser pendant la phase de charge à courant régulé est recalculé en continu. En effet, au fur et à mesure de la charge de la batterie 1, son état de charge augmente et donc également la tension à ses bornes. Le courant maximal étant, notamment, fonction de l'état de charge de la batterie 1, il va évoluer durant la charge de la batterie 1.

Les figures 3 et 4 représentent, de façon schématique, l'évolution du courant maximal de charge Imax admissible aux bornes de la batterie 1 et de la tension de charge V en fonction de l'état de charge SOC de la batterie 1. Ce courant maximal est linéairement décroissant à l'état de charge (SOC) et linéairement croissant à la tension V. Il est important de noter que le courant maximal acceptable par la batterie 1 peut être supérieur au courant de charge moyen défini, classiquement, lors d'une charge à courant constant, ce qui peut permettre d'utiliser au mieux les ressources disponibles. Par ailleurs, le courant maximal de charge dépend de la température θ de la batterie 1 et croît linéairement avec celle-ci (fig.5)

Lorsque la tension de charge V atteint la valeur de tension seuil Vseuil, elle-même réactualisée en continu, notamment en fonction de la température θ de la batterie 1 (fig.2) et du courant de charge, alors l'unité de contrôle 6 passe du mode de charge à courant régulé au mode de charge à tension asservie à la température ambiante θ'. La tension de charge V est alors asservie à la température ambiante θ'. Sur la figure 5, la droite A illustre le passage du mode de charge à courant régulé au mode de charge à tension asservie à la température ambiante.

L'unité de contrôle 6 prend alors en compte la température θ de la batterie 1 ainsi que la température ambiante θ', mesurée par le circuit 7 de mesure de la température pour calculer la différence de température entre la batterie 1 et la température ambiante ainsi que la vitesse d'évolution de cette différence de température. Si la différence de température est supérieure à une valeur seuil prédéterminée (par exemple 1,5°C pour une batterie plomb-acide étanche) ou si la vitesse de variation de la différence de température est supérieure à une valeur seuil prédéterminée (par exemple 2°C/heure pour une batterie plomb-acide étanche), alors l'unité de contrôle 6 arrête la charge de la batterie 1.

Dans le cas contraire, l'unité de contrôle 6 continue la charge de la batterie 1, au moyen du régulateur 3 de puissance, en fixant, en continu, la valeur de la tension de charge V, en fonction de la température ambiante θ'.

Au fur et à mesure de la charge de la batterie 1, lors de la charge à tension asservie à la température ambiante θ', le courant de charge I décroît avec l'augmentation de l'état de charge donc avec le temps, comme illustré sur la figure 5. Le courant de charge I est alors utilisé comme critère de fin de charge. Ainsi, lorsque le courant de charge est égal à une valeur Is du courant seuil de fin de charge, prédéterminée, l'unité de contrôle 6 arrête la charge de la batterie 1. Comme illustré à la figure 5, la valeur du courant seuil de fin de charge est, préférentiellement, indépendante de la température.

La figure 5 représente, à titre d'exemple, la charge d'une batterie pour différentes températures ambiantes. Le courant de charge I et la tension de charge V sont représentés en fonction du temps de charge t, ce dernier étant représentatif de l'état de charge de la batterie. Trois températures de la batterie θ₁, θ₂, θ₃ (θ₁<θ₂<θ₃) et trois températures ambiantes avec θ'₁<θ'₂<θ'₃ sont illustrées dans l'exemple de la figure 5. Seul le fonctionnement à la température ambiante θ'₃ sera décrit, le fonctionnement aux autres températures étant identique mais décalé.

A un instant t₀, l'unité de contrôle 6, mesure la température θ de la batterie 1 (θ=θ₁) et la tension aux bornes de la batterie 1 aux moyens du circuit 7 de mesure de la température et, respectivement, du circuit de mesure 5. Ensuite, grâce à ces mesures et à des abaques appropriés, l'unité de contrôle 6 détermine alors l'état de charge de la batterie 1 puis le courant maximal Imax acceptable par la batterie 1. L'unité de contrôle 6 régule alors le courant de charge I à la valeur Imax. Cette charge à courant régulé se poursuit jusqu'à ce qu'à un instant t₁ auquel la tension V aux bornes de la batterie atteint la tension seuil Vseuil (θ,I). Cette tension seuil est réactualisée en continu en fonction du courant de charge mesuré par le circuit 5 et de l'état de charge de la batterie 1.

Ainsi, entre les instants t₀ et t₁, le système autonome utilise ainsi au mieux les ressources énergétiques disponibles pour charger la batterie 1.

Entre t₀ et t₁, au fur et à mesure de la charge de la batterie 1, l'unité de contrôle 6 recalcule, de façon continue, la valeur du courant maximal acceptable par la batterie 1, en fonction de sa température et de son état de charge. Le régulateur 3 de puissance assure alors l'évolution du courant délivré à la batterie 1 de façon à ce que ce dernier ne dépasse pas la valeur du courant maximal.

Entre les instants t₁ et t₂, la charge de la batterie 1 est réalisée à tension asservie à la température ambiante θ', le courant de charge diminue alors jusqu'à atteindre la valeur Is du courant seuil de fin de charge. L'unité de contrôle 6 arrête alors la charge de la batterie 1 qui est considérée comme chargée.

## Revendications

1. Procédé de charge, à partir d'un générateur (2), d'un élément de stockage d'énergie (1) d'un système autonome comportant une mesure de la température, avec le passage d'un premier mode de charge à un deuxième mode de charge, lorsque la tension (V) aux bornes de l'élément de stockage d'énergie (1) atteint une valeur seuil prédéterminée, le deuxième mode de charge étant une charge à tension asservie à la température, procédé **caractérisé en ce que** le premier mode de charge est une charge à courant régulé à une valeur maximale (Imax) du courant de charge qui est fonction de l'état de charge (SOC) de l'élément de stockage d'énergie (1) et de la température.

2. Procédé selon la revendication 1, **caractérisé en ce que** ladite valeur de seuil de la tension, est fonction de la température (θ) de l'élément de stockage d'énergie (1) et du courant de charge mesuré (I).

3. Procédé selon l'une des revendications 1 et 2, **caractérisé en ce que** ladite valeur de seuil de la tension est linéairement décroissante avec la température (θ) croissante de l'élément de stockage d'énergie (1).

4. Procédé selon l'une quelconque des revendications 1 à 3, **caractérisé en ce que** ladite valeur maximale du courant de charge est linéairement croissante avec la température (θ) et linéairement décroissante avec l'état de charge (SOC) de l'élément de stockage d'énergie (1).

5. Procédé selon l'une quelconque des revendications 1 à 4, **caractérisé en ce que** dans le deuxième mode de charge, la tension est asservie à la température ambiante (θ').

6. Procédé selon l'une quelconque des revendications 1 à 5, **caractérisé en ce que** la charge à tension asservie à la température est interrompue lorsque le courant de charge (I) est inférieur à un seuil (Is) de courant, prédéterminé.

7. Procédé selon l'une quelconque des revendications 1 à 6, **caractérisé en ce que** la charge à tension asservie à la température est interrompue si la différence de température entre la température (θ) de l'élément de stockage d'énergie (1) et la température ambiante (θ') est supérieure à une valeur, prédéterminée.

8. Procédé selon l'une quelconque des revendications 1 à 6, **caractérisé en ce que** la charge à tension asservie à la température est interrompue si la vitesse d'évolution de la différence de température entre la température (θ') de l'élément de stockage d'énergie (1) et la température ambiante (θ') est supérieure à un seuil prédéterminé.

9. Procédé selon l'une quelconque des revendications 1 à 8, **caractérisé en ce que** le générateur (2) est un panneau photovoltaïque.

10. Procédé selon l'une quelconque des revendications 1 à 8, **caractérisé en ce que** le générateur (2) est de type éolien.
